# FASCICULE DE BREVET EUROPEEN

(11) **EP 2 804 988 B1**
(45) Date de publication et mention de la délivrance du brevet: **30.12.2015**
(21) Numéro de dépôt: 13704156.2
(22) Date de dépôt: 15.01.2013
(51) Int. Cl.: C09K 17/42, C09K 17/00, E02D 3/12

(54) **PROCEDE POUR LA CONSOLIDATION DU SOL**
VERFAHREN ZUR BODENVERFESTIGUNG
METHOD FOR CONSOLIDATING SOIL

(30) Priorité: 16.01.2012 FR 1250397
(43) Date de publication de la demande: 26.11.2014
(73) Titulaire: Soletanche Freyssinet, 92500 Rueil-Malmaison (FR)
(72) Inventeur: ESNAULT, Annette, F-92500 Rueil Malmaison (FR); MOSSER, Jean-François, F-92500 Rueil Malmaison (FR); BOREL, Serge, F-92500 Rueil Malmaison (FR)
(74) Mandataire: Nevant, Marc
(86) Numéro de dépôt international: PCT/FR2013/050089
(87) Numéro de publication internationale: WO 2013/107977

(56) Documents cités:
- WO-A1-2006/066326
- WO-A1-2007/069884
- FR-A1- 2 873 725
- FR-A1- 2 911 887

## Description

### Domaine technique de l'invention

L'invention concerne de manière générale le domaine de la consolidation du sol, et de manière plus particulière un procédé pour la consolidation du sol par des bactéries calcifiantes mettant en oeuvre une étape de recyclage des eaux de lavage.

### Etat de la technique

La précipitation des carbonates de calcium par voie bactérienne est un phénomène naturel bien connu : certaines bactéries, en métabolisant un substrat carboné, produisent une augmentation d'ions carbonates et bicarbonates dans le milieu environnant qui, combinés à des ions calcium, entraînent la précipitation de carbonates de calcium.

Cette technique est décrite notamment dans la demande de brevet FR-A-2 644 475 qui concerne un procédé pour la protection d'une surface artificielle grâce à un revêtement de surface réalisé *in situ* sur ladite surface artificielle en plaçant celle-ci au contact de microorganismes minéralisateurs. La demande de brevet WO 2006/066326 concerne une méthode destinée à produire un ciment à haute résistance dans un matériau perméable par voie biologique ; la méthode repose sur l'utilisation combinée d'un microorganisme produisant de l'uréase, d'urée et d'ions calcium, la quantité du microorganisme étant telle que la vitesse d'hydrolyse de l'urée est de 0,5 à 50 mM d'urée hydrolysée / min dans des conditions standards. La demande de brevet FR-A-2 873 725 concerne elle un procédé de consolidation du sol selon lequel on utilise une combinaison de bactéries calcifiantes et de bactéries dénitrifiantes.

Par ailleurs, des modes de fixation des bactéries sur des supports à calcifier sont décrits par exemple dans la demande de brevet WO 2007/069884, qui concerne un procédé pour immobiliser des bactéries dans un matériau perméable auxdites bactéries, basé sur la floculation des bactéries par ajout d'un agent de floculation ; et dans la demande de brevet FR-A-2 911 887, qui concerne un mode de préparation de la biomasse destiné à stimuler la production d'exopolysaccharides afin de favoriser la fixation des bactéries sur le sable.

Les sols fins ou liquéfiables ont une perméabilité très faible, de l'ordre de 10⁻⁵ m/s. La consolidation ou l'étanchéité de tels sols implique l'injection de solutions dont la taille maximale des grains qu'elle contient doit être inférieure au micron. L'intérêt des bactéries calcifiantes est qu'elles peuvent pénétrer profondément dans les sols via le milieu de culture dans lequel elles sont, y vivre tant que des nutriments leur sont apportés et y faire croître des carbonates à la surface des grains de sol en maintenant une porosité ouverte si nécessaire.

Toutefois, les bactéries calcifiantes produisent des composés azotés qui sont rejetés dans le milieu environnant. La gestion de ces 'rejets' est nécessaire pour que le procédé soit acceptable écologiquement. Cet aspect n'est abordé, à la connaissance de la Demanderesse, que dans la demande de brevet FR-A-2 873 725, qui propose une solution de traitement des composés azotés par des bactéries dénitrifiantes. Cette solution n'est cependant pas très satisfaisante d'un point de vue pratique car sa mise en oeuvre est lourde techniquement et économiquement.

D'autres inconvénients sont liés aux contraintes opérationnelles. En effet, le temps de mise en oeuvre peut considérablement varier d'un site à l'autre, ou sur un même site. Cela nécessite d'adapter un phasage d'injection particulier pour pouvoir gérer des temps d'arrêt ou d'attente de chantier qui peuvent varier de plusieurs heures à quelques jours. Il y a alors un risque que les bactéries perdent leur activité pendant ces temps d'attente.

Plus généralement, la technique actuelle ne permet pas, ou ne permet qu'insuffisamment d'adapter les caractéristiques de la biomasse au cours du chantier, en fonction des conditions de mise en oeuvre (nature du terrain à traiter, durée de vie des bactéries, perméabilité du massif à traiter) pour s'ajuster à la durée de vie des bactéries.

Il est donc souhaitable de pouvoir disposer d'un procédé de consolidation du sol compatible avec les conditions de chantier et permettant une gestion flexible des caractéristiques de la biomasse.

Il est également souhaitable que le procédé en question respecte l'environnement, en permettant un traitement simple des composés azotés produits par les bactéries calcifiantes ; un tel procédé devrait également présenter des avantages économiques.

### Brève description des figures

La figure 1 représente l'évolution dans le temps du taux de lyse cellulaire d'une solution bactérienne utilisée dans le cadre de l'invention.
La figure 2 représente la relation entre activité enzymatique (AE) totale et concentration en lyophilisat.
La figure 3A représente la productivité en NH₄⁺ en fonction de la concentration en lyophilisat.
La figure 3B représente la productivité en NH₄⁺ en fonction de l'AE totale.
La figure 3C représente la vitesse d'hydrolyse en fonction de la concentration en lyophilisat.
La figure 4 représente un schéma général de mise en oeuvre du procédé de l'invention.
La figure 5 représente une vue en coupe d'une mise en oeuvre du procédé de l'invention.
Les figures 6 et 7 représentent une vue du dessus de la figure 5.

### Description de l'invention

Selon un premier aspect, l'invention a pour objet un procédé de consolidation du sol par injection de bactéries calcifiantes qui ne nécessite pas d'installations importantes et onéreuses pour la préparation des solutions de bactéries devant être injectées.

Selon un autre aspect, l'invention a pour objet un procédé de consolidation du sol par injection de bactéries calcifiantes comprenant un lavage du sol, dans lequel les eaux de lavage peuvent être réutilisées, notamment pour la préparation des solutions utilisées pour le traitement de consolidation.

Selon un autre aspect, l'invention a pour objet un procédé de consolidation du sol par injection de bactéries calcifiantes dans lequel les composés azotés produits par lesdites bactéries sont traités de manière simple et respectueuse de l'environnement.

Ces objets sont atteints par le procédé selon l'invention pour la consolidation de sol *in situ,* qui comprend les étapes suivantes :
a) l'injection d'une solution de bactéries calcifiantes, préparée à partir de bactéries en poudre, dans le volume de sol à traiter ;
b) l'injection d'une solution calcifiante ;
c) le lavage à l'eau du volume du sol traité ;
d) la mesure de la concentration en ions ammonium de l'eau de lavage et dans le sol traité;
e) le recyclage de l'eau de lavage.

Dans une première étape, le procédé conforme à l'invention comprend l'injection d'une solution de bactéries calcifiantes dans le volume de sol à traiter.

Une bactérie calcifiante est avantageusement une bactérie permettant une augmentation des ions carbonates et bicarbonates dans le milieu environnant, notamment en métabolisant un substrat carboné, pour obtenir la précipitation de carbonates de calcium en présence de calcium. Avantageusement, on utilise une bactérie ayant une activité uréasique ou uréolytique. Une bactérie calcifiante préférée est *Sporosarcina pasteurii.*

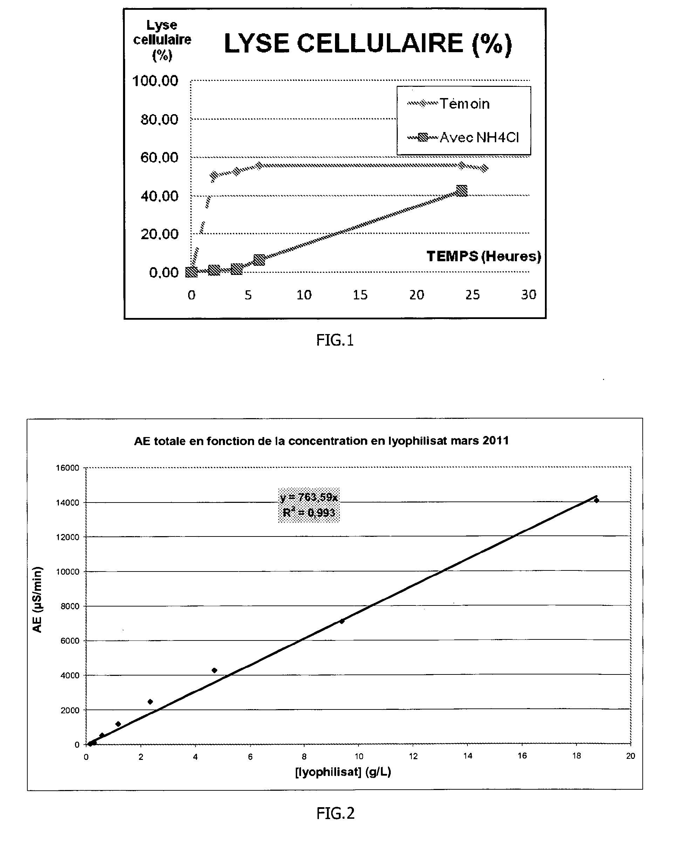

La solution de bactéries calcifiantes est préparée extemporanément sur le site à consolider, par réhydratation de bactéries en poudre. Une telle forme en poudre peut être obtenue par une étape de séchage appropriée, telle que lyophilisation, atomisation ou autre technique, d'une biomasse liquide préalablement préparée industriellement. L'utilisation de bactéries en poudre permet une préparation sur le chantier au fur et à mesure des besoins et permet aussi d'éviter la mise en oeuvre d'un bioréacteur puisqu'il n'est plus nécessaire de cultiver les bactéries sur le site. Lors de la réhydratation, il est préférable d'utiliser une eau d'une force ionique suffisante favorable à la stabilité des bactéries, telle que certaines eaux de réseau suffisamment minéralisées, afin d'éviter une lyse précoce dans les premières heures qui suivent l'hydratation. Il est également possible d'utiliser une eau de lavage résultant de la mise en oeuvre du procédé de l'invention, pour autant que la concentration en ions ammonium de cette eau soit inférieure à 50 g/l. La figure 1 montre qu'une réhydratation de bactéries *Sporosarcina pasteurii* en poudre dans une solution de chlorure d'ammonium à 10 g/l retarde de manière significative la lyse cellulaire en comparaison avec une eau de réseau de faible minéralisation.

De manière conventionnelle, la solution de bactéries calcifiantes comprend les nutriments nécessaires pour assurer leur survie ; cette solution peut également comprendre d'autres ingrédients comme décrit dans la demande de brevet FR-A-2 911 887. Ainsi, la solution de bactéries calcifiantes peut contenir un agent d'adhésion, ajouté pendant ou après la culture des bactéries, avant lyophilisation, ou bien ajouté lors de la réhydratation des bactéries en poudre.

Comme expliqué plus en détail à l'exemple 2, on a établi que, de façon inattendue, il existe une relation de type linéaire entre la productivité en NH₄⁺ sur les quatre premières heures d'hydratation et la concentration initiale du lyophilisat de bactéries, de sorte qu'il est possible d'ajuster le niveau souhaité d'hydrolyse de l'urée.

La solution de bactéries calcifiantes est typiquement injectée dans le sol, par gravité ou sous pression, au moyen de forages d'alimentation. Avantageusement, on prévoit une alimentation par circulation de la solution de bactéries calcifiantes. Cette circulation peut être assurée par l'intermédiaire de forages d'alimentation, de forages de pompage ou de captage. Ces techniques comprennent avantageusement des moyens de contrôle de l'évolution du traitement pour adapter ce dernier, et sont notamment décrites dans la demande de brevet FR-A-2 873 725.

La solution de bactéries calcifiantes est injectée de sorte à obtenir une certaine vitesse dans le terrain, typiquement comprise entre 20 et 100 cm/h. On contrôle l'imprégnation des bactéries par un suivi de la densité optique (cf. FR-A-2 873 725) et par suivi de l'activité enzymatique.

Dans une seconde étape, le procédé conforme à l'invention comprend l'injection d'une solution calcifiante.

On entend par solution calcifiante une solution permettant de générer du carbonate de calcium, CaCO₃, en présence de bactéries calcifiantes. Typiquement, la solution calcifiante comprend de l'urée et du calcium ; la concentration équimolaire de cette solution est avantageusement comprise dans la gamme de 0,1 M à 1,7 M.

La solution calcifiante peut comprendre un agent d'adhésion comme décrit dans la demande de brevet FR-A-2 911 887.

La solution calcifiante est injectée dans le terrain à traiter à une vitesse comprise entre 20 et 100 cm/h. On suit l'évolution de la précipitation de calcite par une mesure de la concentration en ions NH₄⁺ (ces ions sont produits lors de hydrolyse de l'urée : la stoechiométrie indique deux moles de NH₄⁺ formées pour une mole d'urée hydrolysée) ; en fonction des résultats obtenus, il est possible d'injecter de nouveau la solution calcifiante pour compléter le traitement. Selon une variante, on injecte une solution calcifiante de concentration différente de la première. L'injection et, le cas échéant, l'alimentation par circulation, de la solution calcifiante peuvent être effectuées comme décrit ci-dessus pour la solution de bactéries calcifiantes.

Une fois la calcification des bactéries achevée, le procédé selon l'invention comprend, dans une troisième étape, le lavage à l'eau du sol consolidé. Le problème posé par l'utilisation de la voie uréolytique pour la carbonatation est la gestion et l'élimination des ions NH₄⁺ formés. Il n'est en effet généralement pas envisageable pour des raisons environnementales et écologiques de laisser *in situ* des concentrations molaires - ou supramolaires. Par exemple, l'hydrolyse d'une mole d'urée conduit à la formation d'une solution d'ammonium à 36 g/l, alors que la concentration admissible pour une eau potable est de 40 µg/l. L'extraction de la solution d'ammonium est certes possible par pompage. Cependant le retour à des concentrations admissibles *in situ* nécessite l'utilisation de grands volumes d'eau pour réaliser des lavages successifs (également appelés « flushs »). De manière conventionnelle, ces eaux de lavages sont récupérées pour être acheminées vers une usine de retraitement. Le procédé conforme à l'invention permet, lui, de réutiliser l'eau des lavages successifs.

Pour ce faire, le procédé conforme à l'invention comprend, dans une quatrième étape, la mesure de la concentration en ions NH₄⁺ de l'eau de lavage. Une fois cette concentration déterminée, l'eau de lavage est, dans une cinquième étape, réutilisée sur le chantier pour la mise en oeuvre du procédé conforme à l'invention sur d'autres portions de sol à consolider. En fonction de la concentration en ions NH₄⁺ de l'eau de lavage, cette dernière peut servir:
- soit pour réhydrater des bactéries calcifiantes en poudre ;
- soit pour préparer des solutions calcifiantes ,
- soit pour laver le sol (et donc éviter d'avoir recours à l'eau du réseau).

De manière générale, lorsque la concentration en ions NH₄⁺ mesurée est supérieure ou égale à 20 g/l, l'eau de lavage est traitée de manière à obtenir une concentration en ions NH₄⁺ inférieure à 1 g/l. L'eau ainsi obtenue est acheminée vers une unité de stockage et peut typiquement être réutilisée pour des cycles de lavage ultérieurs. Des moyens appropriés pour mettre en oeuvre un tel traitement comprennent par exemple une unité de concentration, notamment une unité de concentration sous vide (évapo-concentration). Dans ce mode de réalisation, le solide obtenu à l'issue de la phase de concentration (NH₄Cl) pourra être valorisé par exemple comme engrais, ou pour préparer de l'urée. Tout autre moyen de concentration, comme par exemple les techniques de cristallisation ou de précipitation, pourra être mis en oeuvre dans le cadre de l'invention.

Toutefois, en fonction de l'état d'avancement du chantier sur lequel le procédé est mis en oeuvre, il est possible d'utiliser une eau de lavage ayant une concentration en ions NH₄⁺ comprise dans la gamme d'environ 5 g/l à environ 50 g/l, de préférence dans la gamme d'environ 20 g/l à environ 50 g/l, de préférence encore dans la gamme d'environ 20 g/l à environ 30 g/l pour réhydrater des bactéries calcifiantes en poudre.

Lorsque la concentration en ions NH₄⁺ est inférieure à 20 g/l, l'eau de lavage est directement acheminée vers une unité de stockage d'eau pour être utilisée de la manière suivante :
- si la concentration en ions NH₄⁺ est comprise entre 1 et <20 g/l, l'eau de lavage peut servir à la préparation de solution de bactéries calcifiantes ou à la préparation de solutions calcifiantes ;
- si la concentration en ions NH₄⁺ est inférieure à 1 g/l, l'eau de lavage peut servir à d'autres cycles de lavage.

De manière avantageuse, l'étape de lavage du sol est répétée jusqu'à l'obtention d'une eau de lavage dont la concentration en ions NH₄⁺ est inférieure à 0,1 g/l. Dans ce cas de figure, l'eau de lavage peut être directement rejetée dans le milieu naturel (par exemple, cours d'eau ou égouts) ou évacuée vers une station d'épuration en fonction des contraintes réglementaires du pays où le chantier est réalisé.

Dans un mode de réalisation de l'invention, le sol à consolider est divisé en parcelles ou plots, de préférence en parcelles ou plots de volume sensiblement égal. Dans ce mode de réalisation, les eaux de lavage obtenues après le traitement du premier plot sont réutilisées pour la préparation de tout ou partie des solutions nécessaires au traitement et/ou au lavage de la ou des parcelles restante(s), selon les indications données ci-dessus.

Il est ainsi possible de valoriser les eaux de lavage en créant une boucle de circulation qui permet de réduire de manière significative la quantité d'eau totale utilisée. Ainsi dans l'exemple donné ci-après, environ 60% du volume d'eau utilisé a pu être recyclé. Ceci est très avantageux d'un point de vue environnemental et économique : le coût d'approvisionnement en eau est réduit ; le volume d'eau à stocker et/ou à traiter avant rejet est réduit ; l'eau du dernier lavage contient une quantité (très) faible en ions ammonium et peut être retraitée à moindre coût.

L'invention est illustrée par les exemples suivants, donnés à titre purement indicatif. Dans ces exemples, on utilise les expressions et abréviations suivantes :
AE : activité enzymatique
AEₜₒₜ : activité enzymatique totale
Biomasse : solution contenant les bactéries calcifiantes
DO : densité optique
Flush : lavage
Solutions calcifiantes 1 et 2 : solutions équimolaires (1,1 M) d'urée et de calcium
Temps de batch : temps de repos pendant lequel l'injection est arrêtée pour laisser la réaction se dérouler
Volume de pores (VP) : volume des vides d'un milieu poreux de volume V

### Exemple 1 : lyse cellulaire en fonction du temps

Les bactéries lorsqu'elles sont soumises à la lyophilisation voient leur structure et/ou leur physiologie parfois fortement perturbées. Ceci se traduit au moment de leur réhydratation dans de l'eau du réseau urbain, par l'apparition plus ou moins rapide d'une lyse cellulaire et/ou d'une diminution de leur activité enzymatique intracellulaire.

On a testé l'influence de l'ajout de chlorure d'ammonium lors de la réhydratation de bactéries *Sporosarcina pasteurii* lyophilisées, selon le protocole suivant.

On a ajouté 78 mg de poudre de lyophilisat à 100 ml d'eau du réseau urbain contenant 10 g/l de NH₄Cl. On a laissé le lyophilisat se réhydrater à température ambiante pendant 5 min sous agitation. On a suivi l'évolution du taux de cellules lysées en fonction du temps en mesurant la densité optique à 600 nm (DO₆₀₀), en fixant T₀ après les 5 min de réhydratation. La DO₆₀₀ a été lue pendant les 6 premières heures puis à 24h et à 26h.

A titre de comparaison (« témoin »), on a effectué la même expérience avec de l'eau du réseau urbain ne contenant pas de NH₄Cl.

La D0₆₀₀ quantifie seulement les cellules entières. Bien que la concentration en lyophilisat soit toujours la même, la DO₆₀₀ à T₀ sont légèrement différentes. Les variations au cours du temps sont alors difficilement comparables. C'est pourquoi on uniformise les résultats en les exprimant en % de cellules lysées.

La figure 1 représente l'évolution du taux de cellules lysées en fonction du temps. L'interprétation des courbes met en évidence un profil commun qui peut être décomposé en deux parties :
- la première correspond à une lyse plus ou moins rapide des cellules,
- la deuxième à l'apparition d'un état d'équilibre.

Ainsi, lorsque le lyophilisat est réhydraté dans de l'eau du réseau urbain, en 6 heures de contact 67 % des cellules sont lysées. Il ne reste plus qu'environ 15 % de cellules entières qui se maintiennent jusqu'à 24 ou 26 h. L'ajout de 10 g/l de NH₄Cl, protège les structures cellulaires puisqu'on constate une absence de lyse au bout de 4h et 60% de cellules non lysées à 24h.

### Exemple 2 : corrélation entre productivité d'azote ammoniacal du lyophilisat et concentration en biomasse Mesure de l'activité enzymatique

On a mis en suspension 0,3 g de poudre de lyophilisat de *Sporosarcina pasteurii* dans 16 ml d'eau pour former un premier flacon identifié comme « pur » avec une concentration de 18,75 g/l. Cette dose de départ a été calculée afin de se situer autour d'une activité enzymatique de 8000 S/min. Ensuite des dilutions au ½ ont été réalisées jusqu'à la dilution 1/128e.

27 ml d'urée à 1,1M et 3 ml d'échantillon de chaque dilution ont été placés dans un bécher de 50 ml (chaque échantillon a donc été dilué 10 fois dans l'urée). La température a été maintenue à 20°C. La conductivité a été suivie toutes les minutes, pendant 6 minutes. L'AE correspond à la pente de la droite représentant la conductivité en fonction du temps et s'exprime en µS/min que l'on multiplie par 10 (facteur de dilution). Les résultats sont présentés dans le tableau 1.

**Tableau 1**

| Dilution | Pur | 1/2 | 1/4 | 1/8 | 1/16 | 1/32 | 1/64 | 1/128 |
|---|---|---|---|---|---|---|---|---|
| [lyophilisat] (g/l) | 18,750 | 9,375 | 4,688 | 2,344 | 1,172 | 0,586 | 0,293 | 0,146 |
| AEₜₒₜ (µS/min) | 14069 | 7095,7 | 4277,1 | 2479 | 1188,1 | 545,4 | 113 | 46,7 |

La figure 2 montre que la relation entre l'AE totale et la concentration en lyophilisat est une relation de type linéaire avec l'équation suivante :
AEₜₒₜ (µS/min) = 763,59 x [lyophilisat] (g/l) ; R² = 0,993
*Mesure de la productivité en NH₄⁺ sur 4 heures*

On a déterminé, pour chaque dilution du lyophilisat, l'évolution dans le temps de la concentration en NH₄⁺. On a prélevé des échantillons à T₀, T₀ + 1h, T₀ + 2h, T₀ + 3h et T₀ + 4h pour les diluer dans des proportions adéquates. Ensuite, 2 ml des ces dilutions et 0,1 ml de réactif de Nessler ont été introduits dans une cuve de spectrométrie adaptée. Après 1 minute on a mesuré la DO à 425 nm. La concentration en NH₄⁺ est calculée selon l'équation qui relie la DO à la concentration en NH₄⁺ de l'échantillon, en retranchant de la DO lue celle d'un témoin à l'eau. Pour l'appareil utilisé lors des expériences, la formule est la suivante :
[NH₄⁺] (mM) = (DO₄₂₅ x dilution) / 2,337.

L'ensemble des résultats est présenté dans le tableau 2 ci-après.

**Tableau 2**

| Dilution | Pur | 1/2 | 1/4 | 1/8 | 1/16 | 1/32 | 1/64 | 1/128 |
|---|---|---|---|---|---|---|---|---|
| [Lyophilisat] (g/L) | 18,75 | 9,38 | 4,69 | 2,34 | 1,17 | 0,59 | 0,29 | 0,15 |
| AE totale (µS/min) | 14069 | 7095,7 | 4277,1 | 2479 | 1188,1 | 545,4 | 113 | 46,7 |
| Productivité (mmol/l/h) | / | 5625,4 | 3929,5 | 2439,5 | 1218,4 | 602,45 | 244,62 | 56,265 |
| Vitesse d'hydrolyse (mmol urée/l/min) | / | 46,88 | 32,75 | 20,33 | 10,15 | 5,02 | 2,04 | 0,47 |

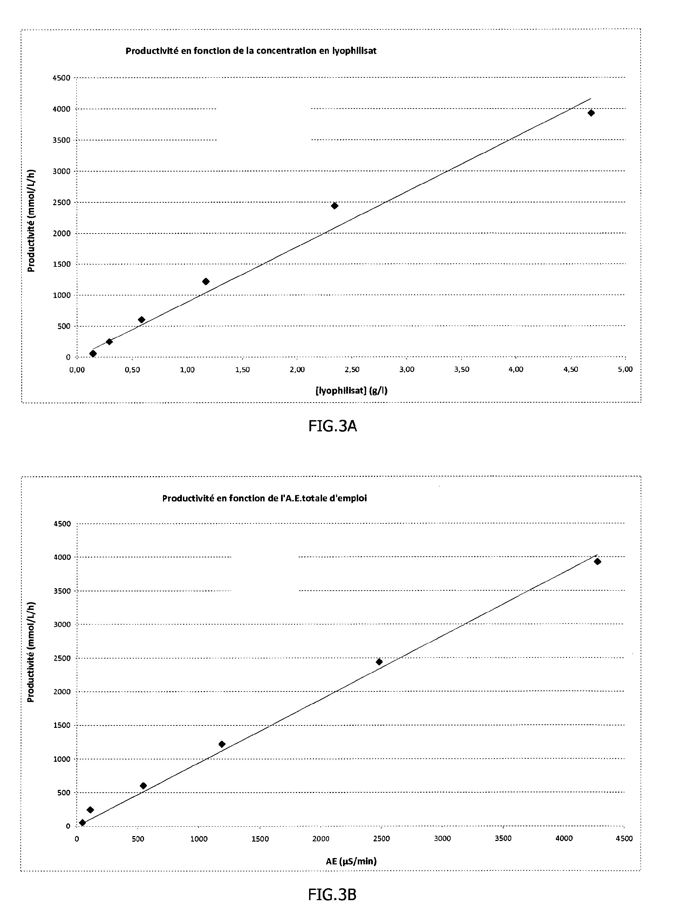

Les productivités mesurées sur les quatre premières heures sont proportionnelles aux concentrations en lyophilisat utilisées et aux activités enzymatiques initiales, comme indiqué dans les figures 3A et 3B.

Ces deux graphiques illustrent la souplesse offerte par l'utilisation des bactéries sous forme de poudre sur site, et de choisir la dilution de la biomasse en fonction de la productivité recherchée. En effet, à partir de cette productivité, il est possible de déterminer l'activité enzymatique correspondante et la concentration en bactéries à utiliser dans la biomasse. Le contrôle de l'activité enzymatique est une mesure simple à mettre en oeuvre sur site puisqu'elle s'effectue sur 6 minutes.

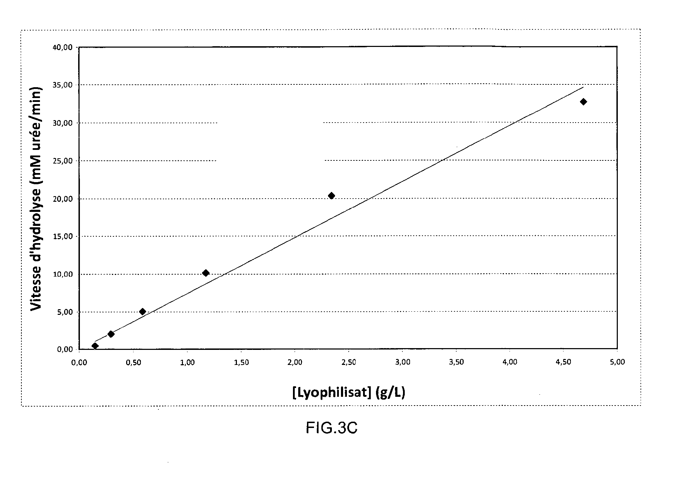

A partir de la mesure de productivité, il est également possible de dégager les vitesses d'hydrolyse de l'urée sur les quatre premières heures, comme indiqué figure 3C. On remarque que dans la gamme usuelle d'utilisation de lyophilisat, jusqu'à environ 5 g/l, les vitesses d'hydrolyse mesurées pendant 4 h atteignent des valeurs de l'ordre de 35 mM urée / min.

En utilisant la relation donnée dans la demande de brevet WO 2006/066326 (urée hydrolysée (mM) = 11,11 x conductivité (mS)), on obtient une vitesse d'hydrolyse de l'ordre de 100 mM/min pour une valeur d'AEₜₒₜ de 4277 µS/min (cf tableau 2, dilution ¼). Il est intéressant de comparer cette valeur avec la valeur maximale donnée dans WO 2006/066326 de 50 mM d'urée / min.

### Exemple 3 : traitement du sol

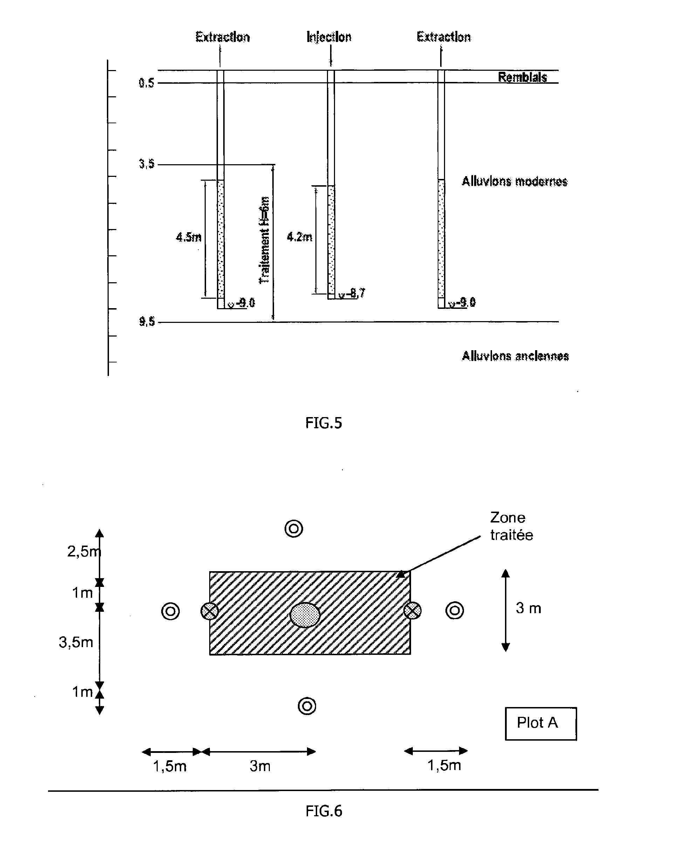

Le procédé conforme à l'invention a été mis en oeuvre sur un terrain de 6m x 12m. Les sols en présence sont constitués des alluvions du Rhône modernes sur une couche d'alluvions anciennes plus compactes (cf. figure 5). Les alluvions modernes sont des sables lâches, plus ou moins limoneux, très sensibles à la liquéfaction en cas de séisme.

L'objectif du traitement est d'améliorer la cohésion des sables lâches afin de réduire le risque de liquéfaction en cas de séisme. La résistance à atteindre (protection contre la liquéfaction) est de l'ordre de 0,2 MPa à 0,25 MPa. On entend par « liquéfaction des sables » tout processus conduisant à la perte totale de résistance au cisaillement du sol par augmentation de la pression interstitielle (selon la norme NF P 06-013).

Les forages ont été espacés, avec un maillage de 3m x 3m, en divisant la zone en 4 plots A, B, C, D, de 6 m x 3 m chacun ; la figure 5 représente une vue en coupe de l'un de ces plots.

La zone de sable lâche liquéfiable a été détectée au « Cone Penetration Test » (CPT). Le risque de liquéfaction est faible dans la zone hors nappe, on a donc traité la tranche de sable liquéfiable saturée, de 3,50 m à 9,5 m, soit 6 m d'épaisseur. Le volume de sol à traiter par plot est donc : 3 x 6 x 6 = 108 m³, ce qui correspond à un volume de pores (VP) d'environ 44 m³ pour une porosité de 40% (VP = 108 x 0,4).

Des calculs hydrauliques classiques assistés par un logiciel adapté permettent de d'optimiser le maillage des forages (d'injection, de pompage et de lavage), ainsi que les paramètres du traitement, tels que débits d'injections et de pompage temps de batch, etc.

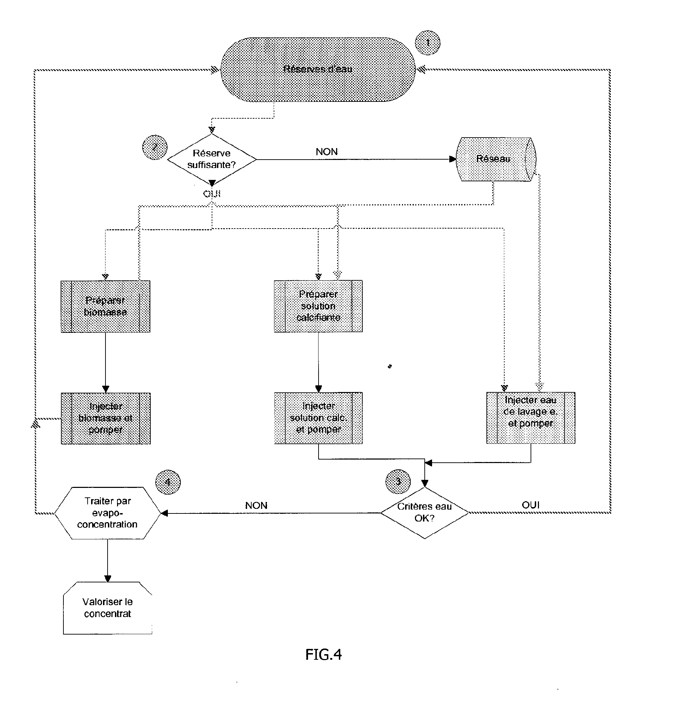

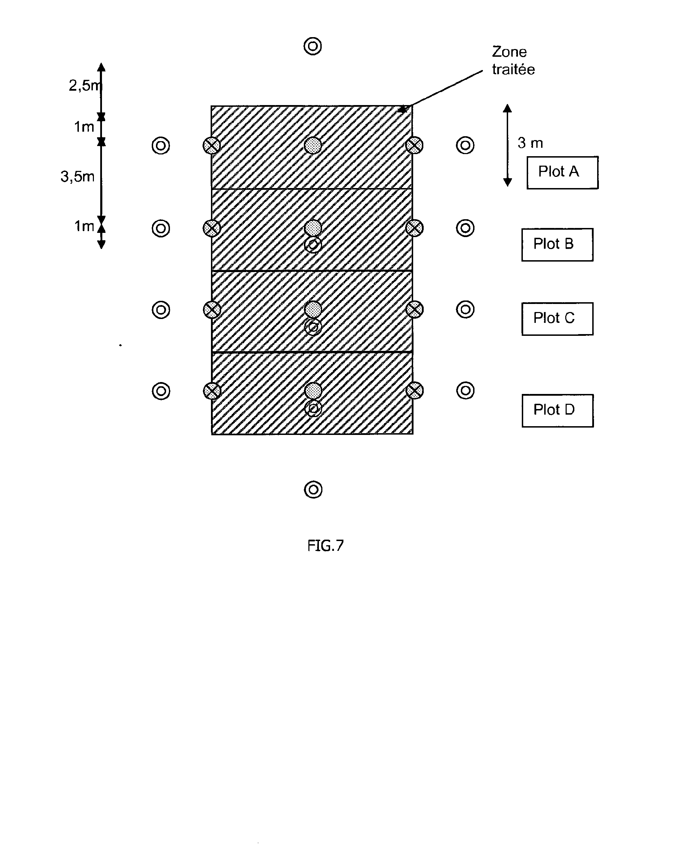

Les différentes étapes du procédé sont représentées schématiquement à la figure 4 et de manière plus détaillée aux figures 6 et 7 ; dans ces dernières on utilise les symboles suivants :
○ Puits d'injection de la biomasse et des solutions calcifiante, et puits d'extraction des solutions calcifiantes pendant le lavage
⊗ Puits d'extraction pendant les injections
⊚ Puits de lavage crépinés dans la couche traitée

### Préparation des solutions

En fonction des contraintes de mise en oeuvre du site, on se fixe une vitesse d'hydrolyse de 5,8 mmol urée/l/min pour avoir une AEₜₒₜ de 600 µS/min.

Pour atteindre ces valeurs, il faut utiliser une concentration en bactéries lyophilisées de 0,78 g/l.

### Plot A - Injection des solutions - figure 6

Les solutions ont été injectées selon le protocole suivant. Le débit d'injection était de 5,5 m³/h.

| | |
|---|---|
| T₀ à T₀ + 7,5h | = T₁ Injection de 1 VP (6 x 3 x 6 x 0,4) = 44 m³ de bactéries |
| T₁ à T₁+7h | = T₂ Temps de batch |
| T₂ à T₂ +7,5 h | = T₃ Injection solution calcifiante N°1 (1 VP) |
| T₃ à T₃+ 24h | = T₄ Temps de batch |
| T₄ à T₄ +7,5 h | = T₅ Injection solution calcifiante N°2 (1 VP) |
| T₅ à T₅+ 35h | = T₆ Temps de batch |

On injecte dans un premier temps la solution de bactéries calcifiantes, qui va déplacer l'eau contenue dans le sol ; on laisse les bactéries se fixer dans le sol (temps de batch). Puis on injecte la solution calcifiante n°1, qui va déplacer la solution de bactéries ; on recueille un résidu de biomasse. On laisse la calcification se produire (temps de batch), puis on injecte une seconde solution calcifiante, qui va déplacer la première solution calcifiante (cette étape est facultative, on pourra s'en dispenser si la résistance mécanique recherchée est atteinte) ; on recueille un résidu de la première solution calcifiante, et on laisse la calcification se terminer (temps de batch).

### Plot A - La vage - figure 6

Le lavage à l'eau s'effectue avec un débit de 3,5 m³/h.

On effectue autant de lavages que nécessaires pour obtenir une eau de lavage dont la concentration en ions NH₄⁺ est inférieure à 100 mg/L.

### Plots B-C-D - figure 7

Les plots B, C et D sont traités de la même manière que le plot A.

### Résultats

Le tableau 3 récapitule les différentes étapes du procédé conforme à l'invention, appliqué au plot A, et inclut la concentration en ions NH₄⁺ mesurée dès que la calcification du sol se produit. On a extrapolé les valeurs mesurées pour le plot A aux plots B, C et D ; les résultats sont présentés dans les tableaux 4 à 6.

Comme on peut le constater à la lecture de tableau 3, l'eau du sol déplacée par l'injection de la biomasse est utilisée pour préparer la première solution calcifiante, et l'eau de la biomasse déplacée par l'injection de la première solution calcifiante est utilisée pour préparer la seconde solution calcifiante.

Le sol consolidé du plot A est lavé sept fois en utilisant l'eau du réseau d'alimentation. Les eaux recueillies sont recyclées pour le traitement du plot B (eaux de lavage A5-A10) et du plot D (eaux de lavage A3-A4).

Les eaux de lavage du plot B sont recyclées pour le traitement du plot C (eaux B5-B10) et du plot D (eaux B3-B4).

Les eaux de lavage du plot C sont recyclées pour le traitement du plot D (eaux C5-C9).

**Tableau 3**

| | Eau utilisée | Produit injecté | Produit extrait | [NH₄ ⁺] (g/l) | VP (m³) | Destination produit extrait | | REF. |
|---|---|---|---|---|---|---|---|---|
| | réseau | Biomasse | Eau terrain | - | 44 | recyclage | sol cal 1A | A1 |
| | A1 | Sol Cal 1A | Eau biomasse | - | 44 | recyclage | sol cal 2A | A2 |
| Plot A | A2 | Sol Cal 2A | NH₄Cl | 35,51 | 44 | évaporation | flush 6D | A3 |
| | réseau | Flush 1 | NH₄Cl | 41,79 | 44 | évaporation | flush 7D | A4 |
| | réseau | Flush 2 | NH₄Cl | 16,46 | 44 | recyclage | biomasse B | A5 |
| | réseau | Flush 3 | NH₄Cl | 4,82 | 44 | recyclage | biomasse B /sol cal 1B | A6 |
| | réseau | Flush 4 | NH₄Cl | 1,53 | 44 | recyclage | sol cal 1B+2B | A7 |
| | réseau | Flush 5 | NH₄Cl | 0,53 | 44 | recyclage | flush 1B | A8 |
| | réseau | Flush 6 | NH₄Cl | 0,21 | 44 | recyclage | flush 2B | A9 |
| | réseau | Flush 7 | NH₄Cl | 0,09 | 44 | recyclage | flush 3B | A10 |

**Tableau 4**

| | Eau utilisée | Produit injecté | Produit extrait | [NH₄⁺] (g/1) | VP (m³) | Destination produit extrait | | REF |
|---|---|---|---|---|---|---|---|---|
| | A5 | Biomasse | Eau terrain | - | 44 | recyclage | sol cal 1B | B1 |
| | A6 | Sol Cal 1B | Eau biomasse | - | 44 | recyclage | sol cal 2B | B2 |
| Plot B | A7 | Sol Cal 2B | NH₄Cl | 35,51 | 44 | évaporation | flush 3D | B3 |
| | A8 | Flush 1 | NH₄Cl | 41,79 | 44 | évaporation | flush 4D | B4 |
| | A9 | Flush 2 | NH₄Cl | 16,46 | 44 | recyclage | biomasse C | B5 |
| | A10 | Flush 3 | NH₄Cl | 4,82 | 44 | recyclage | biomasse C /sol cal 1C | B6 |
| | réseau | Flush 4 | NH₄Cl | 1,53 | 44 | recyclage | sol cal 1C+2C | B7 |
| | réseau | Flush 5 | NH₄Cl | 0,53 | 44 | recyclage | flush 1C | B8 |
| | réseau | Flush 6 | NH₄Cl | 0,21 | 44 | recyclage | flush 2C | B9 |
| | réseau | Flush 7 | NH₄Cl | 0,09 | 44 | recyclage | flush 3C | B10 |

**Tableau 5**

| | Eau utilisée | Produit injecté | Produit extrait | [NH₄+] (g/l) | VP (m³) | Destination produit extrait | | REF |
|---|---|---|---|---|---|---|---|---|
| | B5 | Biomasse | Eau terrain | - | 44 | recyclage | sol cal 1c | C1 |
| | B6 | Sol Cal 1 | Eau biomasse | - | 44 | recyclage | sol cal 2c | C2 |
| Plot C | B7 | Sol Cal 2 | NH₄Cl | 35,51 | 44 | évaporation | eau propre | C3 |
| | B8 | Flush 1 | NH₄Cl | 41,79 | 44 | évaporation | eau propre | C4 |
| | B9 | Flush 2 | NH₄Cl | 16,46 | 44 | recyclage | biomasse D | C5 |
| | B10 | Flush 3 | NH₄Cl | 4,82 | 44 | recyclage | biomasse D /sol cal 1D | C6 |
| | réseau | Flush 4 | NH₄Cl | 1,53 | 44 | recyclage | sol cal 1+2D | C7 |
| | réseau | Flush 5 | NH₄Cl | 0,53 | 44 | recyclage | flush 1D | C8 |
| | réseau | Flush 6 | NH₄Cl | 0,21 | 44 | recyclage | flush 2D | C9 |
| | réseau | Flush 7 | NH₄Cl | 0,09 | 44 | recyclage | flush 5D | C10 |

**Tableau 6**

| | | Produit injecté | Produit extrait | [NH₄⁺] (g/l) | VP(m³) | Destination produit extrait | |
|---|---|---|---|---|---|---|---|
| | C5 | Biomasse | Eau terrain | - | 44 | évacuation | milieu naturel |
| | C6 | Sol Cal 1D | biomasse | - | 44 | évacuation | milieu naturel |
| Plot D | C7 | Sol Cal 2D | NH₄Cl | 35,51 | 44 | évaporation | milieu naturel |
| | C8 | Flush 1 | NH₄Cl | 41,79 | 44 | évaporation | milieu naturel |
| | C9 | Flush 2 | NH₄Cl | 16,46 | 44 | évaporation | milieu naturel |
| | B3 | Flush 3 | NH₄Cl | 4,82 | 44 | évaporation | milieu naturel |
| | B4 | Flush 4 | NH₄Cl | 1,53 | 44 | évacuation | milieu naturel |
| | C10 | Flush 5 | NH₄Cl | 0,53 | 44 | évacuation | |
| | A3 | Flush 6 | NH₄Cl | 0,21 | 44 | évacuation | milieu naturel |
| | A4 | Flush 7 | NH₄Cl | 0,09 | 44 | évacuation | milieu naturel |

Un récapitulatif des différents produits injectés pour le traitement des plots A à D est donné dans le Tableau 7.

**Tableau 7**

| Origine | | Volumes en m³ | % total | % de la part recyclée |
|---|---|---|---|---|
| Réseau¹ | 16*44 | 704 | 40% | |
| Sol Cal² | 8*44 | 352 | 20% | 33,33% |
| Biomasse³ | 3*44 | 132 | 7,5% | 12,5% |
| Flush⁴ | 13*44 | 572 | 32,5% | 54,17% |
| **total** | | 1760 | 100% | |
| | | | | |
| **Recyclé (2+3+4)** | | **1056** | **60%** | |

| | | | | |
|---|---|---|---|---|
| 1 : eau du réseau utilisée pour traiter les plots A, B et C 2 : solutions calcifiantes, préparées à partir d'eau recyclée, utilisées pour traiter les plots A, B, C et D 3 : biomasse, préparée à partir d'eau recyclée, utilisée pour traiter les plots B, C et D 4 : eau de lavage recyclée, utilisée pour traiter les plots B, C et D | | | | |

On constate que dans le procédé conforme à l'invention, 60% de l'eau utilisée soit pour préparer la biomasse, soit pour préparer les solutions calcifiantes, soit pour laver le sol consolidé, est de l'eau recyclée. Ceci s'avère particulièrement avantageux sur des sites où l'approvisionnement en eau est difficile. Cela facilite également la gestion sur site (stockage, transport, traitement).

## Revendications

1. Procédé de consolidation de sol *in situ* comportant les étapes suivantes :
a) l'injection d'une solution de bactéries calcifiantes, préparée à partir de bactéries en poudre, dans le volume de sol à traiter ;
b) l'injection d'une solution calcifiante ;
c) le lavage à l'eau du volume du sol traité ;
d) la mesure de la concentration en ions ammonium de l'eau de lavage et dans le sol traité;
e) le recyclage de l'eau de lavage dans le procédé.

2. Procédé selon la revendication 1, qui comprend en outre le contrôle de l'avancement de la calcification des bactéries et, si nécessaire, la répétition de l'étape b) avec une solution calcifiante identique ou différente.

3. Procédé selon la revendication 2, dans lequel l'étape b) est répétée en utilisant la même solution calcifiante.

4. Procédé selon l'une quelconque des revendications 1 à 3, dans lequel la concentration en ions ammonium de l'eau de lavage résultant de l'étape c) est supérieure ou égale à 20 g/l, l'étape e) comprenant :
e1) le traitement de l'eau de lavage pour obtenir une eau dont la concentration en ions ammonium est inférieure à 1 g/l ;
e2) l'acheminement de l'eau ainsi obtenue vers une unité de stockage d'eau.

5. Procédé selon l'une quelconque des revendications 1 à 3, dans lequel la concentration en ions ammonium de l'eau de lavage résultant de l'étape c) est inférieure à 20 g/l, l'étape e) comprenant :
e3) l'acheminement de l'eau de lavage vers une unité de stockage d'eau.

6. Procédé selon l'une quelconque des revendications 1 à 5, dans lequel l'étape c) est répétée jusqu'à l'obtention d'une concentration en ions ammonium dans l'eau de lavage inférieure à 100 mg/l.

7. Procédé selon l'une quelconque des revendications 1 à 6, dans lequel le dosage des bactéries en poudre est déterminé en fonction de la productivité recherchée.

8. Procédé de consolidation *in situ* de plusieurs parcelles de sol qui comprend la mise en oeuvre du procédé défini dans l'une quelconque des revendications 1 à 7 pour chacune desdites parcelles.

9. Procédé selon la revendication 8, dans lequel les eaux de lavage d'une des parcelles, dont la concentration en ions ammonium est comprise dans la gamme de 5 à 50 g/l, de préférence dans la gamme de 20 g/l à 30 g/l, sont utilisées pour préparer la solution de bactéries calcifiantes nécessaires au traitement d'une ou plusieurs autres parcelles.

10. Procédé selon la revendication 8, dans lequel les eaux de lavage d'une des parcelles, dont la concentration en ions ammonium est comprise dans la gamme de 1 g/l à <20 g/l, sont utilisées pour préparer la solution de bactéries calcifiantes et/ou le(s) solution(s) calcifiante(s) nécessaires au traitement d'une ou plusieurs autres parcelles.

11. Procédé selon la revendication 8, dans lequel les eaux de lavage d'une des parcelles, dont la concentration en ions ammonium est inférieure à 1 g/l, sont utilisées pour le lavage d'une ou plusieurs autres parcelles.

## Patentansprüche

1. Verfahren zur In-situ-Bodenverfestigung, umfassend die folgenden Schritte:
a) das Einspritzen einer Lösung aus kalkerzeugenden Bakterien, die aus pulverförmigen Bakterien hergestellt ist, in das Volumen eines zu behandelnden Bodens,
b) das Einspritzen einer kalkerzeugenden Lösung,
c) das Waschen des Volumens des behandelten Bodens mit Wasser,
d) das Messen der Konzentration an Ammoniumionen des Waschwassers und in dem behandelten Boden,
e) das Rückführen des Waschwassers in das Verfahren.

2. Verfahren nach Anspruch 1, das ferner die Kontrolle des Fortschritts der Verkalkung der Bakterien und, falls erforderlich, die Wiederholung des Schrittes b) mit einer identischen oder anderen kalkerzeugenden Lösung umfasst.

3. Verfahren nach Anspruch 2, bei dem Schritt b) unter Verwendung der gleichen kalkerzeugenden Lösung wiederholt wird.

4. Verfahren nach einem der Ansprüche 1 bis 3, bei dem die Konzentration an Ammoniumionen des aus Schritt c) resultierenden Waschwassers größer als oder gleich 20 g/l beträgt, wobei Schritt e) umfasst.
e1) die Behandlung des Waschwassers, um ein Wasser zu erhalten, dessen Konzentration an Ammoniumionen weniger als 1 g/l beträgt,
e2) das Befördern des so erhaltenen Wassers zu einer Wasserspeicherungseinheit.

5. Verfahren nach einem der Ansprüche 1 bis 3, bei dem die Konzentration an Ammoniumionen des aus Schritt c) resultierenden Waschwassers weniger als 20 g/l beträgt, wobei Schritt e) umfasst.
e3) das Befördern des Waschwassers zu einer Wasserspeicherungseinheit.

6. Verfahren nach einem der Ansprüche 1 bis 5, bei dem Schritt c) bis zum Erhalt einer Konzentration an Ammoniumionen in dem Waschwasser von weniger als 100 mg/l wiederholt wird.

7. Verfahren nach einem der Ansprüche 1 bis 6, bei dem die Dosierung der pulverförmigen Bakterien in Abhängigkeit von der gewünschten Produktivität bestimmt wird.

8. Verfahren zur In-situ-Verfestigung von mehreren Bodenparzellen, das die Durchführung des in einem der Ansprüche 1 bis 7 definierten Verfahrens für jede der Parzellen umfasst.

9. Verfahren nach Anspruch 8, bei dem die Waschwasser von einer der Parzellen, deren Konzentration an Ammoniumionen im Bereich von 5 bis 50 g/l, vorzugsweise im Bereich von 20 g/l bis 30 g/l liegt, verwendet werden, um die Lösung aus kalkerzeugenden Bakterien, die für die Behandlung von einer oder mehreren weiteren Parzellen erforderlich sind, herzustellen.

10. Verfahren nach Anspruch 8, bei dem die Waschwasser von einer der Parzellen, deren Konzentration an Ammoniumionen im Bereich von 1 g/l bis <20 g/l liegt, verwendet werden, um die Lösung aus kalkerzeugenden Bakterien und/oder die kalkerzeugende(n) Lösung(en), die für die Behandlung von einer oder mehreren weiteren Parzellen erforderlich sind, herzustellen.

11. Verfahren nach Anspruch 8, bei dem die Waschwasser von einer der Parzellen, deren Konzentration an Ammoniumionen weniger als 1 g/l beträgt, für das Waschen von einer oder mehreren weiteren Parzellen verwendet werden.

## Claims

1. A method for consolidating soil *in situ* comprising the following steps:
a) injecting a solution of calcifying bacteria, prepared from bacteria in powder form, into the volume of soil to be treated;
b) injecting a calcifying solution;
c) washing the volume of soil treated with water;
d) measuring the ammonium ion concentration in the wash water and in the treated soil;
e) recycling the wash water to the process.

2. The method as claimed in claim 1, which further comprises monitoring the progress of calcification of the bacteria and, if necessary, repeating step b) using an identical or different calcifying solution.

3. The method as claimed in claim 2, wherein step b) is repeated using the same calcifying solution.

4. The method as claimed in any one of claims 1 to 3, wherein the ammonium ion concentration of the wash water resulting from step c) is greater than or equal to 20 g/l, step e) comprising:
e1) treating the wash water to obtain water whose ammonium ion concentration is below 1 g/l;
e2) conveying the water thus obtained to a water storage unit.

5. The method as claimed in any one of claims 1 to 3, wherein the ammonium ion concentration of the wash water resulting from step c) is below 20 g/l, step e) comprising:
e3) conveying the wash water to a water storage unit.

6. The method as claimed in any one of claims 1 to 5, wherein step c) is repeated until an ammonium ion concentration in the wash water below 100 mg/l is obtained.

7. The method as claimed in any one of claims 1 to 6, wherein the dosage of bacteria in powder form is determined as a function of the required productivity.

8. A method for *in situ* consolidation of several plots of soil that comprises carrying out the method defined in any one of claims 1 to 7 for each of said plots.

9. The method as claimed in claim 8, wherein the wash water from one of the plots, whose ammonium ion concentration is in the range from 5 to 50 g/l, preferably in the range from 20 g/l to 30 g/l, is used for preparing the solution of calcifying bacteria required for treating one or more other plots.

10. The method as claimed in claim 8, wherein the wash water from one of the plots, whose ammonium ion concentration is in the range from 1 g/l to <20 g/l, is used for preparing the solution of calcifying bacteria and/or the calcifying solution(s) required for treating one or more other plots.

11. The method as claimed in claim 8, wherein the wash water from one of the plots, whose ammonium ion concentration is below 1 g/l, is used for washing one or more other plots.
